# EUROPÄISCHE PATENTSCHRIFT

(11) **EP 2 495 086 B1**
(45) Veröffentlichungstag und Bekanntmachung des Hinweises auf die Patenterteilung: **10.09.2014**
(21) Anmeldenummer: 12157938.7
(22) Anmeldetag: 02.03.2012
(51) Int. Cl.: B29C 49/46, B29C 49/56, B29C 49/06

(54) **Blasmaschine mit Blasformverriegelung im Reinraum**
Blow moulding machine with mould locking means in a clean room
Souffleuse dotée d'un verrouillage de moule de soufflage dans la salle stérile

(30) Priorität: 04.03.2011 DE 102011013126
(43) Veröffentlichungstag der Anmeldung: 05.09.2012
(73) Patentinhaber: Krones AG, 93073 Neutraubling (DE)
(72) Erfinder: Voth, Klaus, 93083 Obertraubling (DE); Geltinger, Florian, 93093 Donaustauf (DE); Neubauer, Michael, 93053 Regensburg (DE)
(74) Vertreter: Bittner, Bernhard

(56) Entgegenhaltungen:
- EP-A1- 2 388 129
- EP-A2- 2 218 569
- DE-A1-102009 015 519
- US-A1- 2006 275 525

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt und weisen dabei üblicherweise auf einem Träger angeordnete Umformungsstationen auf, in denen jeweils Kunststoffvorformlinge durch Beaufschlagung mit Druckluft zu Kunststoffbehältnissen umgewandelt werden. Für manche Anwendungen ist es dabei erforderlich, dass dieser Umformungsvorgang unter sterilen Bedingungen stattfindet. In einigen Ländern werden für derartige aseptische Behandlungen Richtlinien aufgestellt. So werden beispielsweise in den USA derartige Richtlinien seitens der FDA (Food and Drug Administration) aufgestellt und überwacht.

Zu diesem Zweck weisen die Maschinen Sterilräume auf, wobei in diesen Sterilräumen der Umformungsvorgang stattfindet. Aus der WO 2010 020529 A2 ist eine derartige aseptische Blasmaschine bekannt. Bei derartigen Blasmaschinen tritt das grundsätzliche Problem auf, dass jegliche Spalte und Lagerstellen innerhalb der sterilen Zonen zu vermeiden sind. In diesen könnten sich Keime befinden, die durch die enge Geometrie in dem jeweiligen Spalt bei Sterilisation der Maschine (zum Beispiel durch gasförmiges H₂O₂) vor der Abtötung geschützt wären. Es wäre deshalb möglich, dass diese Keime zu einer Kontamination der Maschine und der zu erzeugenden Behältnisse führen.

Eine Blasmaschine und insbesondere eine Streckblasmaschine enthält üblicherweise mehrere Blasstationen, in denen die Kunststoffvorformlinge durch Anlegen eines Innendrucks zu Kunststoffbehältnissen geblasen werden. Eine wichtige Komponente einer Blasstation ist dabei der Verriegelungsmechanismus. Dieser verbindet beziehungsweise verriegelt während des Blasvorgangs die beiden Formträgerhälften. Nach Beendigung des Blasvorgangs öffnet die Verriegelung und das Behältnis kann nach dem Öffnen der Form entnommen und ein neuer Kunststoffformling eingebracht werden. Dieser Verriegelungsmechanismus weist dabei üblicherweise ein schwenkbares Element auf, welches nach einem Schwenkvorgang in ein weiteres Element eingreift. Eine Betätigung dieses schwenkenden Elementes findet dabei üblicherweise über Kurvenhebel statt, die entsprechend von einer Führungskurve betätigt werden. Derartige Kurvenhebel, aber auch die entsprechenden Lagerstellen stellen dabei insbesondere bei aseptischen Anwendungen jedoch Problemzonen dar.

Der vorliegenden Erfindung liegt daher die Aufgabe zugrunde, die Sterilhaltung derartiger Blasmaschinen zu verbessern. Dies wird erfindungsgemäß durch den Gegenstand des unabhängigen Anspruchs erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Vielzahl von Umformungsstationen auf, welche an einem beweglichen Träger angeordnet sind, wobei die Umformungsstationen jeweils Blasformen aufweisen, innerhalb derer die Kunststoffvorformlinge durch Beaufschlagung mit einem fließfähigem Medium zu Kunststoffbehältnissen umformbar sind sowie Blasformträger zum Halten dieser Blasformen. Dabei weisen die Blasformträger wenigstens zwei relativ zueinander bewegliche und insbesondere schwenkbewegliche Blasformträgerteile zum Öffnen und Schließen der Blasformen auf sowie einen gegenüber einer Umgebung mittels wenigstens einer Wandung abgegrenzten Reinraum, der die einzelnen Umformungsstationen wenigstens teilweise umgibt sodass die Umformungsstationen innerhalb dieses Reinraums bewegbar sind.

Weiterhin weist die Vorrichtung einen (bevorzugt zumindest teilweise innerhalb des Reinraums angeordneten) Verriegelungsmechanismus auf, der zum Verriegeln der beiden Blasformträgerteile miteinander in einem geschlossenem Zustand der Blasform dient.

Erfindungsgemäß weist der Verriegelungsmechanismus ein erstes Verriegelungselement auf, welches zum Verriegeln mit einem zweiten Verriegelungselement zusammenwirkt, wobei das erste Verriegelungselement mittels einer Bewegungseinrichtung bewegbar (innerhalb des Reinraums) angeordnet ist und die Bewegungseinrichtung mittels wenigstens einer zumindest teilweise (und bevorzugt vollständig) außerhalb des Reinraums angeordneten Lagereinrichtung gelagert ist.

Bevorzugt sind wenigstens zwei Lagereinrichtungen und besonders bevorzugt genau zwei Lagereinrichtungen zum Lagern der Bewegungseinrichtungen vorgesehen. Vorteilhaft sind diese Lagereinrichtungen derart gestaltet, dass sie eine Abdichtung des Reinraums gegenüber dessen Umgebung erlauben.

Vorteilhaft handelt es sich bei der Bewegungseinrichtung um ein Element, welches selbst bewegbar ist wobei durch eine Bewegung dieser Bewegungseinrichtung zumindest mittelbar auch eine Bewegung des ersten Verriegelungselements verursacht wird. Besonders bevorzugt handelt es sich bei der Bewegungseinrichtung um eine Schwenkwelle, die besonders bevorzugt schwenkbar um eine vorgegebene Schwenkachse angeordnet ist. Diese Schwenkachse ist dabei vorteilhaft ortsfest gegenüber dem jeweiligen Blasformträger. Vorteilhaft greift weiterhin ein Verriegelungselement in das andere ein. Bevorzugt greift ein Verriegelungselement in das andere zum Verriegeln ein. Der Reinraum (im Folgenden auch als Sterilraum bezeichnet) ist vorteilhaft vollständig gegenüber einer Umgebung (insbesondere mittels Wänden) abgegrenzt.

Vorteilhaft ist die Bewegungseinrichtung bzw. die Schwenkwelle nicht an dem Blasformträger gelagert sondern die Lagereinrichtung zum Lagern der Bewegungseinrichtung ist vorteilhaft in wenigstens einer Richtung von dem Blasformträger beabstandet. Dabei kann die Lagereinrichtung in einer Richtung der Schwenkwelle selbst von dem Formträger beabstandet sein, es wäre jedoch möglich, dass die Lagereinrichtung daneben oder zusätzlich auch quer zu dieser Richtung der Schwenkwelle von dem Formträger beabstandet ist. Es wird darauf hingewiesen, dass insbesondere bei nicht aseptischen Anwendungen auch eine derartige Lagerung der Schwenkwelle an anderen Bereichen als dem Formträger unabhängig von einem Reinraum denkbar ist. Die Anmelderin behält sich vor, auf eine derartige Ausführungsform Schutz zu beanspruchen.

Der Blasformträger ist dabei insbesondere innerhalb des Reinraums angeordnet. Durch die hier beschriebene Anordnung der Lagereinrichtung wenigstens teilweise außerhalb des Reinraums wird erreicht, dass ein hygienekritisches Bauteil den Reinraum selbst nicht mehr beeinflusst sondern außerhalb desselben angeordnet ist. Bei einer weiteren vorteilhaften Ausführungsform trägt der bewegliche Träger, bei dem es sich insbesondere um ein Blasrad handelt, die Schwenkwelle.

Bei einer weiteren vorteilhaften Einführungsform ist der besagte Träger um eine vorgegebene Drehachse drehbar gelagert. Bei dieser Ausführung handelt es sich bei der Blasmaschine um eine Rundläuferblasmaschine, bei der die Umformungsstationen entlang einer kreisförmigen Bahn transportiert werden.

Vorteilhaft ist wenigstens ein Verriegelungselement schwenkbar gegenüber dem Trägerteil angeordnet.

Bei einer weiteren vorteilhaften Ausführungsform ist die Schwenkwelle in ihrer Längsrichtung länger als das Blasformträgerteil. Vorteilhaft ist die Schwenkwelle in der Längsrichtung der Schwenkwelle auch länger als die gesamte Umformungsstation.

Bei einer weiteren vorteilhaften Ausführungsform weist die Bewegungseinrichtung bzw. die Schwenkwelle einen Abschnitt auf, der in dem Sterilraum liegt und wenigstens einen Abschnitt, der außerhalb des Sterilraums angeordnet ist. Vorteilhaft ist wenigstens ein Endabschnitt der Schwenkwelle und sind bevorzugt beide Endabschnitte der Schwenkwelle außerhalb des Sterilraums angeordnet.

Bei einer weiteren vorteilhaften Ausführungsform ist die wenigstens eine Lagereinrichtung und sind bevorzugt beide Lagereinrichtungen zumindest teilweise an dem Träger drehbar angeordnet.

Bei einer weiteren bevorzugten Ausführungsform ist die Schwenkwelle mittels wenigstens einer Dichtungseinrichtung gegenüber dem Träger abgedichtet. Vorteilhaft handelt es sich bei dieser Dichtungseinrichtung um eine Wellendichtung.

Im Gegensatz zum Stand der Technik erfolgt daher die Lagerung der Verriegelung nicht am Formträger. Auch erfolgt die Lagerung der Verriegelung vorteilhaft nicht an einer der Blasformen. Genauer gesagt werden bei dieser hygienischen Gestaltung der Baugruppe die Lagerstellen am Formträger möglichst eliminiert. Diese entstanden im Stand der Technik dadurch, dass die Verriegelungsstelle an einem Formträger (drehbar) gelagert war. Im Rahmen der Erfindung wird vorteilhaft vorgesehen, dass die Schwenkwelle oder Verriegelungswelle an einem anderen Bauteil der Maschine gelagert ist. Bei einer aseptischen Blasmaschine ist das vorzugsweise das Blasrad, welches hier besonders bevorzugt zugleich als tragendes Teil dient. Auf diese Weise befinden sich, wie oben erwähnt, die Lagerstellen außerhalb des Reinraums und lediglich der Mittelteil der Schwenkwelle beziehungsweise Bewegungseinrichtung befindet sich im Reinraum und kann dort die Formträger verriegeln. Vorteilhaft ist wenigstens ein Element des Verriegelungsmechanismus drehfest mit der Schwenkwelle gekoppelt und besonders bevorzugt ist dieses Element einteilig mit der Schwenkwelle ausgebildet.

Bei einer weiteren vorteilhaften Ausführungsform weist der Träger an seinem Außenumfang eine Ausnehmung auf, in der die Umformungsstationen angeordnet sind. So kann beispielsweise der Träger ein C-förmiges Profil aufweisen, wobei die Umformungsstationen innerhalb dieses C-förmigen Profils angeordnet sind. Dabei können die Schenkel dieses C-förmigen Profils (die vorteilhaft flanschartig ausgebildet sind) zur Aufnahme der Schwenkwelle dienen.

Bei einer weiteren vorteilhaften Ausführungsform weist wenigstens ein Verriegelungselement wenigstens eine lochartige Ausnehmung auf und das andere Verriegelungselement wenigstens einen Vorsprung, der in einem verriegeltem Zustand in diese lochartige Ausnehmung eingreift. So wäre es möglich, dass eines der Verriegelungselemente eine flache plattenförmige Bauweise aufweist und die Verriegelungswelle oder ein Bestandteil der Verriegelungswelle in die besagten lochartigen Ausnehmungen dieses plattenförmigen Gegenstücks eingreift. Es wäre jedoch auch möglich, dass das plattenförmige Stück drehfest an der Schwenkwelle angeordnet ist und in entsprechende Vorsprünge des zweiten Verriegelungselements eingreift. Vorzugsweise ist das zweite Verriegelungselement an einem bzw. dem gegenüber dem Träger schwenkbeweglichen Blasformträgerteil angeordnet.

Auf diese Weise wird in verriegeltem Zustand nur eine Belastung auf Zug erfolgen.

Bei einer weiteren vorteilhaften Ausführungsform ist ein Blasformträgerteil ortsfest gegenüber dem Träger angeordnet. Dies bedeutet, dass zum Öffnen und Schließen nur eines der beiden Blasformträgerteile gegenüber dem Träger bewegt, insbesondere geschwenkt wird. Bei einer weiteren vorteilhaften Ausführungsform weist die Vorrichtung ein Betätigungselement zum Betätigen des ersten Verrieglungselements auf und dieses Betätigungselement ist außerhalb des Reinraums angeordnet. Bei diesem Element kann es sich beispielsweise um einen Kurvenhebel handeln, der außerhalb dieses Reinraums angeordnet ist und mit Hilfe einer Führungskurve bewegt wird. Bei dieser Führungskurve handelt es sich besonders bevorzugt um eine stationäre Kurve, welche vorteilhaft ebenfalls außerhalb des Reinraums angeordnet ist. Vorteilhaft wird die oben erwähnte Schwenkwelle oder Verriegelungswelle ohne eine Umlenkung direkt angesteuert. Es wäre jedoch auch möglich, dass ein motorischer, hydraulischer und/oder pneumatischer Antrieb zum Bewegen der besagten Schwenkwelle bzw. Bewegungseinrichtung vorgesehen ist.

Weitere Vorteile und Ausführungsformen ergeben sich aus den beigefügten Zeichnungen:

Darin zeigen:
- Fig. 1: eine schematische Darstellung einer Anlage zum Herstellen von Kunststoffbehältnissen: und
- Fig. 2: eine Ansicht eines Reinraums im Bereich einer Blasstation,
- Fig. 3: eine Darstellung einer Umformungsstation nach dem Stand der Technik mit Verriegelung;
- Fig. 4: eine Teildarstellung der in Fig. 3 gezeigten Vorrichtung;
- Fig. 5: eine Darstellung einer erfindungsgemäßen Vorrichtung;
- Fig. 6: eine Seitenansicht der in Fig. 5 gezeigten Vorrichtung;
- Fig. 7: eine weitere Ansicht der in Fig. 5 gezeigten Vorrichtung;
- Fig. 8: eine weitere Ausführungsform einer erfindungsgemäßen Vorrichtung;
- Fig. 9: eine weitere Ausführungsform einer erfindungsgemäßen Vorrichtung;
- Fig. 10: eine weitere Ausgestaltung eines Verriegelungsmechanismus;
- Fig. 11: eine weitere Teildarstellung eines Verriegelungsmechanismus;
- Fig. 12: eine weitere Ansicht des in Fig. 11 gezeigten Verriegelungsmechanismus;
- Fig. 13: eine Draufsicht auf den in Fig. 12 gezeigten Verriegelungsmechnismus;
- Fig. 14: eine Darstellung eines Verriegelungsmechnismus nach dem Stand der Technik; und
- Fig. 15: eine Darstellung eines Verriegelungsmechanismus mit Betätigungselement.

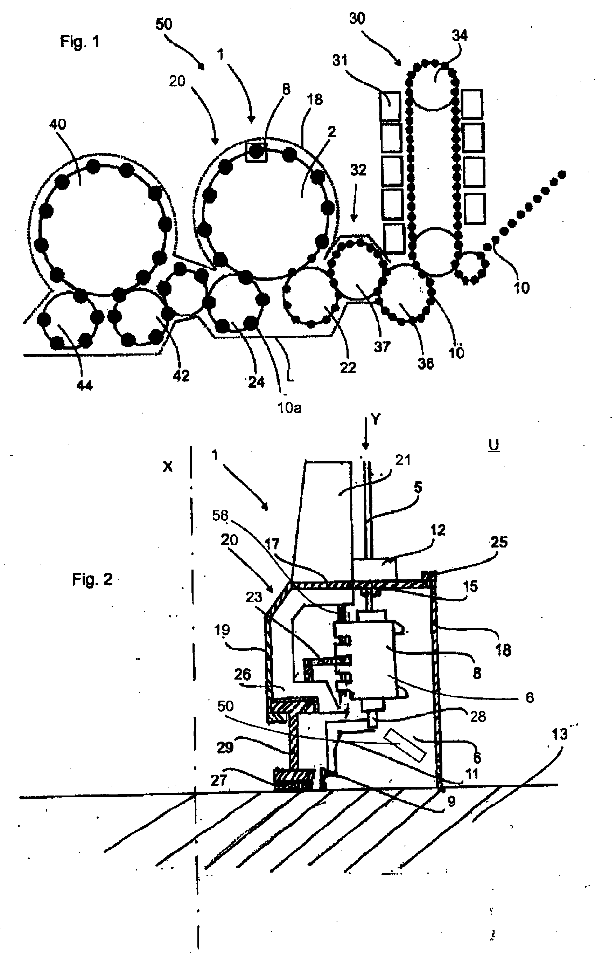

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepaßt Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungselnrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 6 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 Im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 16 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 16 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform 4 ausbildet. Dieser Träger ist dabei ebenfalls in der Richtung Y bewegbar.

Das Bezugszeichen 50 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 50 kann dabei die Umformungsstationen 8 beispielsweise mit Wasserstoffperoxid oder einem anderen Sterilisationsmittel beaufschlagen. Dabei kann die Sterilisationseinrichtung 50 stationär angeordnet sein und die Umformungsstationen können sich gegenüber dieser Sterilisationseinrichtung 50 bewegen. Diese Sterilisationseinrichtung 50 kann sich am Transportrad 2 oder an der stehenden Wandung 18 befinden oder generell stationär angeordnet sein und z.B. aus Düsen bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C - förmigen Aussenumfang aufweist, der auch teilweise die Aussenwandungen des Reinraums ausbildet. Damit dreht sich hier diese C -förmige Reinraumwand mit der Transporteinrichtung 2 d.h. dem Blasrad- Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Aussenwandung des Reinraums statt. Diese Aussenwandung ist dabei vorteilhaft stationär angeordnet.

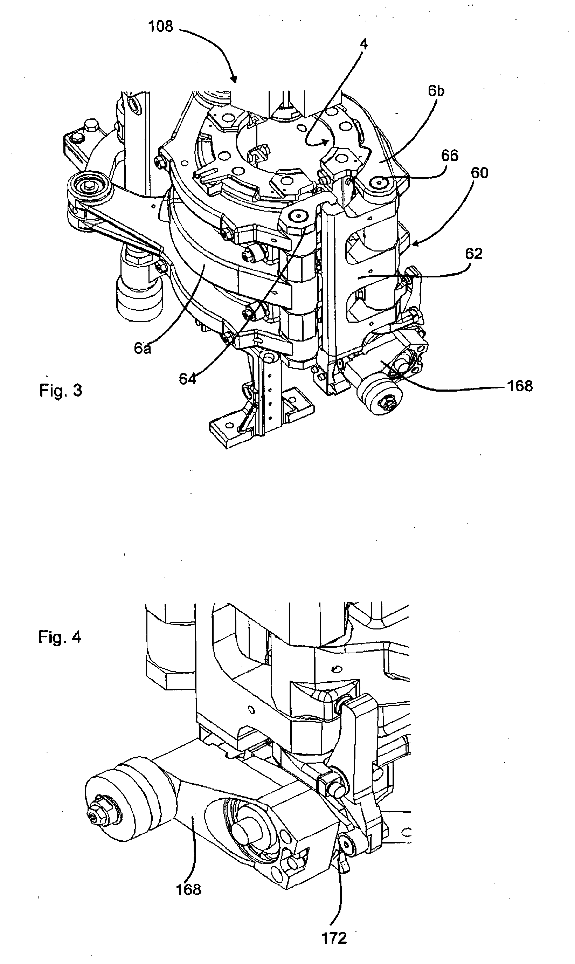

Figur 3 zeigt eine Umformungsstation 108 nach dem internen Stand der Technik der Anmelderin. Diese Umformungsstation 108 weist dabei ein erstes Balsformträgerteil 6a und ein zweites Blasformträgerteil 6b auf, die bezüglich einander schwenkbar sind, um auf diese Weise die Umformungsstation 108 zu öffnen oder zu schließen. An diesen Blasformträgerteilen 6a und 6b ist eine Blasform 4 beziehungsweise sind entsprechende Blasformhälften angeordnet. Das Bezugszeichen 168 bezieht sich auf einen an dem Blasformträgerteil 6a angeordnetem Arm, der mit einem Betätigungsmechanismus gekoppelt ist, um die Blasformträgerteile zu öffnen beziehungsweise zu schließen.

Eine entsprechende Führungskurve zur Ansteuerung des Öffnungs- und Schließmechanismus ist dabei vorteilhaft außerhalb des Reinraums angeordnet. Weiterhin weist die Umformungsstation einen in seiner Gesamtheit mit 60 bezeichneten Verriegelungsmechanismus auf. Dieser Verriegelungsmechanismus dient zum Verriegeln der Blasformträgerteile und damit auch der Blasformen während des eigentlichen Expansiosvorgangs. Der Verriegelungsmechanismus 60 weist dabei hier eine Schwenkwelle 66 auf, über die ein erstes Verriegelungselement 62 schwenkbar an dem Blasformträgerteil 6b angeordnet ist. Ein zweites Verriegelungselement ist an dem ersten Blasformträgerteil 6a angeordnet.

Die Verriegelungswelle ist damit hier in einem der beiden Formträger gelagert. Dabei sind mehrere über die Höhe dieses Formträgers verteilte Lagerstellen vorgesehen, um eine gleichmäßige Kraftverteilung in den Bauteilen zu gewährleisten. Dies ist deshalb erforderlich, da die Verrieglung eine Haltekraft von mehreren 10.000 kN aufnehmen muss. Der Verriegelungsvorgang besteht aus einer Rotationsbewegung der Verrieglung. Diese Bewegung wird von einer stationären, am Grundaufbau der Maschine befestigten Kurve erzeugt und über mehrere Umlenkungen an die Verriegelungswelle 66 weitergeleitet.

Figur 4 zeigt eine Teildarstellung des Betätigungsmechanismus 68. Das Bezugszeichen 172 kennzeichnet eine Rasteinrichtung, mit der gewährleistet wird, dass der Verrieglungsmechanismus 60 beispielsweise in Betrieb in einer verriegelten Position einrasten kann und gegebenenfalls auch in die verriegelte Stellung gedrängt wird.

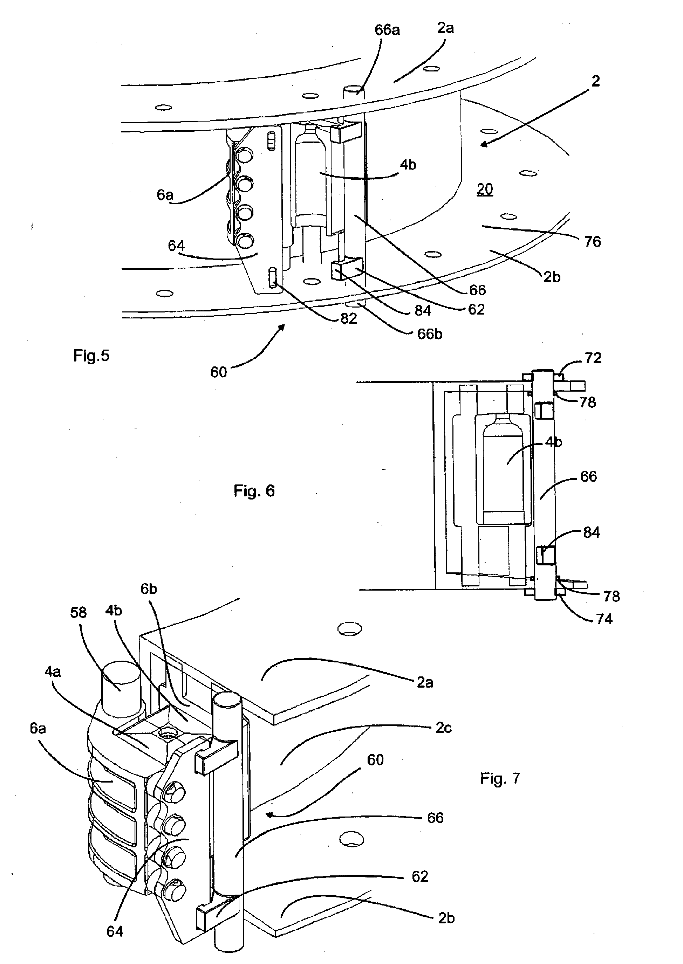

Figur 5 zeigt eine Darstellung einer erfindungsgemäßen Ausführungsform. Bei dieser Gestaltung erkennt man, dass sich die Schwenkwelle bzw. Verriegelungswelle 66, welche zum Schwenken des Eingriffselements 62 dient und welche hier einteilig mit dem Eingriffselement ausgebildet ist, durch zwei Flansche 2a und 2b welche hier Bestandteile des Trägers 2 sind, hindurch erstreckt. Auf diese Weise ist es möglich, die Lagerung der Verriegelungswelle 66 aus dem Reinraum 20 herauszuführen. Bevorzugt ist an der Schwenkwelle bzw. Verriegelungswelle ein Verriegelungselement fest (ggfs jedoch lösbar) angeordnet. Der Träger 2 weist hier an seinem Aussenumfang ein C - förmiges Profil auf, wobei die Umformungsstationen 8 innerhalb der Ausnehmung 76 dieses C- förmigen Profils angeordnet sind. Innerhalb dieser Ausnehmung befindet sich vorteilhaft auch der Reinraum 20. Das Bezugszeichen 60 bezieht sich auf den Verriegelungsmechanismus in seiner Gesamtheit.

Das Bezugszeichen 84 kennzeichnet einen Vorsprung, der zum Verriegeln in ein entsprechendes Loch beziehungsweise eine Ausnehmung 82 eingreift. Dieser Vorsprung ist Teil des Verriegelungselements 62 Damit ist bei der in Figur 5 gezeigten Ausführungsform die Verriegelungswelle an einem anderen Bauteil der Maschine als dem Formträger 6b gelagert. Bei der in Fig. 5 gezeigten aseptischen Blasmaschine handelt es sich dabei, wie in Figur 5 gezeigt, vorzugsweise um das Blasrad, das hier gleichzeitig als tragendes Teil dient. Somit befinden sich, wie erwähnt, die Lagerstellen außerhalb des Reinraums. Lediglich der Mittelteil der Verriegelungswelle 66 befindet sich im Reinraum und kann dort die Formträger verriegeln. Die Bezugszeichen 66a und 66b beziehen sich damit auf die jeweiligen Endabschnitte der Verriegelungswelle, welche aus dem Reinraum herausragen.

Figur 6 zeigt eine Seitenansicht der in Figur 5 gezeigten Ausführungsform. Man erkennt hier weiterhin Dichtungseinrichtungen 78, wie zum Beispiel Wellendichtungen, welche die Welle gegenüber dem Reinraum abdichten. Die Lagerstellen sind hier oberhalb der oberen Dichtungseinrichtung 78 beziehungsweise unterhalb der Dichtungseinrichtung 78 angeordnet und damit nicht mehr im Reinraum befindlich.

Die Bezugszeichen 72 und 74 kennzeichnen daher grob schematisch Lagereinrichtungen zum Lagern der Schwenkwelle 66. Die Lagereinrichtungen 72, 74 können dabei auch direkt in die jeweiligen Flansche 2a, 2b bzw. in den Träger 2 eingebaut sein.

Bei diesen Lagereinrichtungen kann es sich beispielsweise um Gleitlager, Wälzlager oder hydrostatische Lager handeln.

Figur 7 zeigt eine weitere Ausführungsform einer erfindungsgemäßen Vorrichtung, diesmal in einem geschlossenem Zustand. Dies bedeutet, dass die Schwenkwelle bzw. Verriegelungswelle 66 so gedreht ist, dass die Vorsprünge 84 jeweils in die in Figur 5 gezeigten Ausnehmungen 82 eingreifen. Auch erkennt man hier die Blasformteile 4a und 4b, an denen die jeweiligen Formträgerteile 6a und 6b angeordnet sind. Bezugszeichen 64 kennzeichnet wieder das Verriegelungselement, in welches das erste Verriegelungselement 62 eingreift. Das Bezugszeichen 58 kennzeichnet eine Schwenkwelle, die zum Auseinanderklappen der Blasformträger 6a, 6b dient. Auch eine Lagerung dieser Welle kann sich außerhalb des Reinraums befinden.

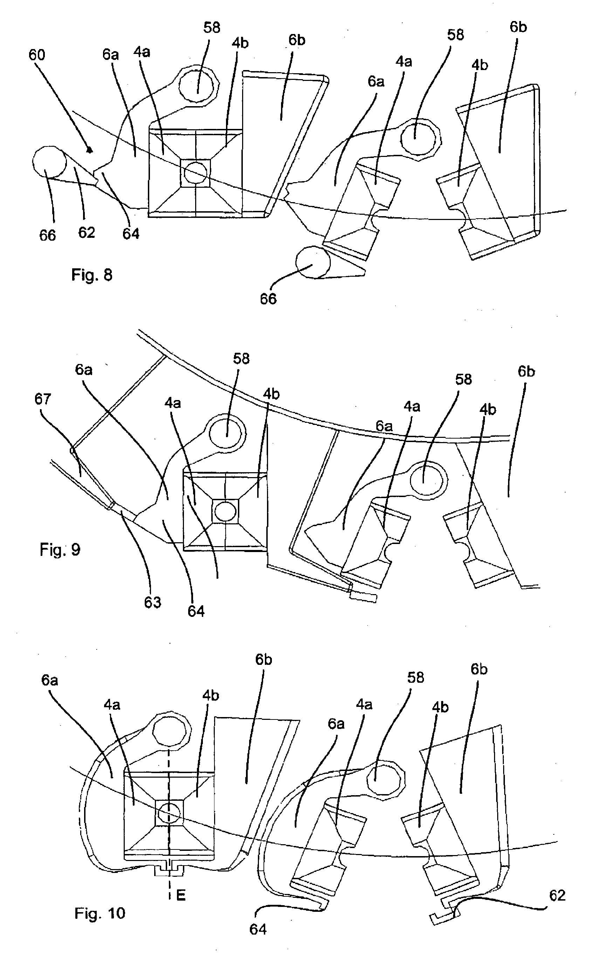

Figur 8 zeigt eine weitere Ausgestaltung einer erfindungsgemäßen Vorrichtung, wobei hier einmal ein geöffneter Zustand der Blasform (rechtes Teilbild) und ein geschlossener Zustand der Blasform dargestellt ist. Bei dieser Ausführungsform ist die Verriegelungswelle 66 hier hinter dem beweglichen Blasformträger 6a angeordnet. Man erkennt, dass lediglich der Formträger 6a um die Welle 58 schwenkbar ist und auf den Formträger 6b zugeklappt wird. Nach dem Schließen der Formträgerhälte (vgl. linkes Teilbild) wird die Verriegelungswelle 66 um einen bestimmten Betrag gegen den Uhrzeigersinn gedreht. Auf diese Weise greift das erste Verriegelungselement 62 in das zweite Verriegelungselement 64 ein und arretiert damit die Blasformteile 4a und 4b in dem geschlossenem Zustand. Bei dieser Ausführungsform ist es möglich, dass der bewegliche Formträger 6a weniger massiv gestaltet wird, da die aus dem Blasdruck resultierende Kraft größten Teils direkt in die Verriegelungswelle 66 eingeleitet wird. Auch bei dieser Ausführungsform können die Endabschnitte der Verriegelungswelle 66 aus dem Reinraum herausgeführt werden beziehungsweise die Lagereinrichtungen außerhalb des Reinraums angeordnet sein.

Es wird auch darauf hingewiesen, dass insbesondere die in Figur 3 gezeigte Ausführungsform auch unabhängig von einer aseptischen Ausführungsform beziehungsweise auch unabhängig von dem Vorhandensein eines Reinraums verwenden werden kann. Dies bedeutet, dass bei den in den Figuren 8 - 10 gezeigten Ausführungsformen die Lagestellen nicht notwendig außerhalb eines Reinraums angeordnet sein müssen. Es wären auch nicht aseptische Anwendungen denkbar, bei denen kein Reinraum vorhanden ist, in dem die Behältnisse bzw. die Blasformen transportiert werden. In jedem Falle ist jedoch hier die Verriegelungswelle von dem Blasformträger beabstandet, genauer in einer senkrecht zu der Erstreckungsrichtung der Verriegelungswelle stehenden Richtung. Diese Richtung steht in den Figuren 8 - 10 jeweils senkrecht zu der Figurenebene.

Figur 9 zeigt eine weitere Ausführungsform einer erfindungsgemäßen Blasformverriegelung. Bei dieser Ausführungsform führt das erste Verriegelungselement 63 jedoch keine rotative sondern bevorzugt eine translatorische Bewegung aus. Eine Leiste beziehungsweise ein Klotz 63, der hier das erste Verriegelungselement 63 bildet, wird nach dem Schließen des Formträgers verschoben und verschließt ihn dadurch. Es wäre jedoch auch möglich, dass die Leiste oder der Klotz 63 auch über eine Rotation in die Verriegelungsposition geschwenkt wird. Bei der in Figur 9 gezeigten Ausführungsform können die Lagerstellen, die zum Bewegen des ersten Verriegelungselements 63 dienen, außerhalb eines Reinraums angeordnet seien. Es wäre jedoch auch möglich, dass auch hier kein Reinraum vorgesehen ist und lediglich das jeweilige Verriegelungselement 63 zumindest in der Öffnungsposition von dem Blasformträger beabstandet ist. Bei dieser Ausführungsform ist daher die Verriegelung nicht an einem der Blasformträger gelagert und sie ist bevorzugt auch nicht an einer der Blasformen gelagert. Das Bezugszeichen 67 kennzeichnet einen Stützkörper zum Abstützen des Klotzes. Auch die weiteren gezeigten Ausführungsformen sind, wie oben erwähnt auch ohne einen Reinraum d.h. ohne die Anwendung auf eine aseptische Maschine denkbar.

Weiterhin wird bei diesen Ausführungsformen bevorzugt das Verriegelungselement 62 auf Druck beansprucht, wie insbesondere in den Figuren 8 und 9 deutlich wird.

Vorteilhaft befindet sich dabei das Verriegelungselement in einem Bereich der aus dem Blasdruck resultierenden Kraft.

Wie gezeigt ist dabei eine Bewegung des Verriegelungselements 62 rotatorisch und/oder translatorisch möglich.

Figur 10 zeigt eine weitere Ausführungsform einer erfindungsgemäßen Vorrichtung. Bei dieser Ausführungsform erfolgt das Verriegeln durch eine translatorische Bewegung des ersten Verriegelungselements 62. Dieses weist hier einen C-förmigen Querschnitt auf und verbindet zur Verriegelung die feste mit der beweglichen Formträgerhälfte. Auf diese Weise ergibt sich ein geschlossener Kraftfluss zwischen den beiden Formträgerhälften 6a und 6b.

Weiterhin befindet sich bevorzugt insbesondere bei dieser Ausführungsform das erste Verrieglungselement 62 im Bereich einer Trennebene zwischen den beiden Blasformteilen 4a und 4b. Die Trennebene ist hier gestrichelt durch das Bezugszeichen E veranschaulicht.

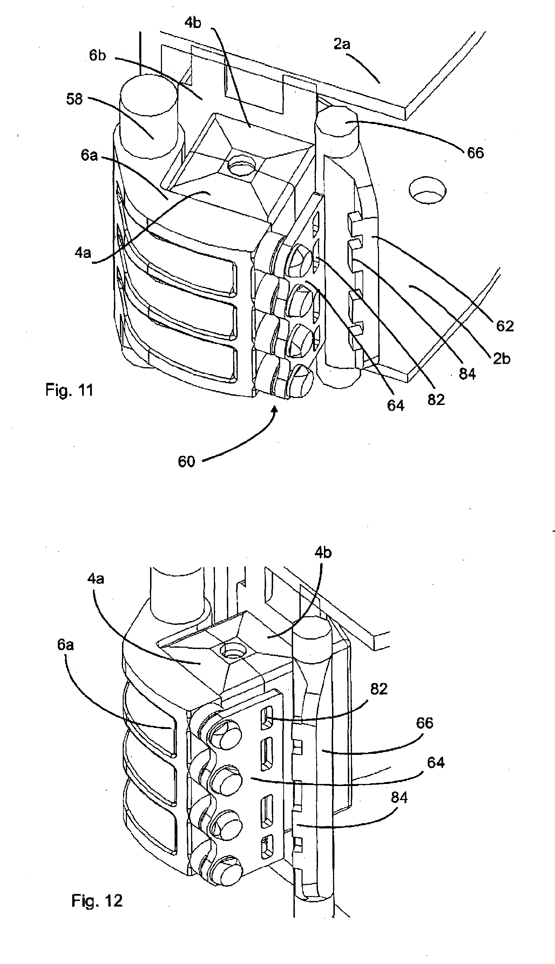

Figur 11 zeigt eine weitere Ausführungsform eines Verriegelungsmechanismus 60. Hier ist das zweite Verriegelungselement 64 als Verriegelungslasche ausgeführt mit einer ebenen beziehungsweise flachen Bauweise. Die Verriegelungswelle 66 greift über Vorsprünge 84 in diese Verrieglungslasche beziehungsweise das zweite Verriegelungselement 64 ein. Dies führt dazu, dass die Verriegelungslasche beziehungsweise das zweite Verriegelungselement 64 weitgehend nur auf Zug belastet ist. Es entstehen keine Momente beziehungsweise Kräfte wie bei herkömmlichen Hakenverriegelungen.

Figur 12 veranschaulicht ebenfalls diesen Zustand, jedoch aus einer anderen Ansicht. Man erkennt hier, dass mehrere Vorsprünge 84 vorgesehen sind, die entsprechend auf diese Vorsprünge angepassten Löcher 82 in einem verriegeltem Zustand eingreifen.

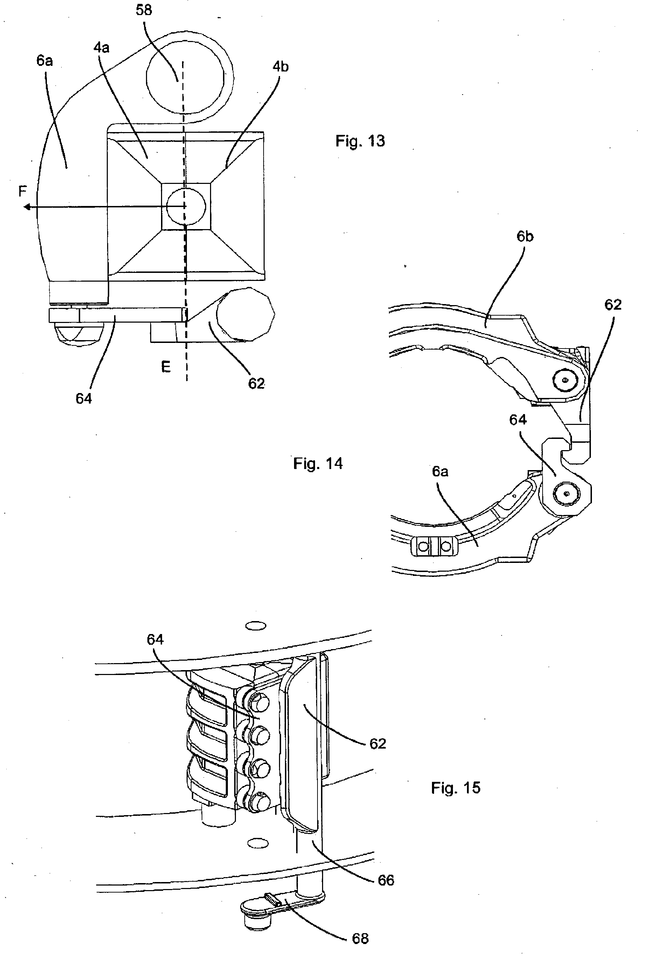

Figur 13 zeigt eine weitere Veranschaulichung dieses Sachverhalts. Man erkennt hier eine Kraft F, die aus dem Blasdruck resultiert. Die ausgeführte flache Verriegelungslasche beziehungsweise das zweite Verriegelungselement 64 wird hier fast ausschließlich auf Zug belastet.

Figur 14 zeigt im Gegensatz hierzu eine Vorrichtung nach dem Stand der Technik. Man erkennt hier eine Hakenverriegelung zwischen den beiden Verriegelungselementen 62 und 64. In diesem Falle treten insbesondere auch andere Kräfte als solche Kräfte die die Verriegelungslaschen ausschließlich auf Zug belasten auf, nämlich Kräfte, welche diese Hakenverriegelungen 62 und 64 umbiegen könnten.

Figur 15 zeigt eine weitere Darstellung ähnlich der bereits oben gezeigten Darstellung. Man erkennt hier zusätzlich ein Betätigungselement 68, welches zum Schwenken der Schwenkwelle 66 dient. Hier ist die Verriegelungswelle 66 direkt und ohne Umlenken oder dergleichen von dem Betätigungselement 68 betätigbar. Eine entsprechende Führungskurve (nicht gezeigt) kann mit dem Grundgestell verbunden und außerhalb des Reinraums 20 angeordnet sein. Bei einer Drehung des Karussells wird auf diese Weise die Schwenkbewegung der Verriegelungswelle 66 erzeugt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungsvorrichtung
- 2: Träger, Transporteinrichtung
- 4: Blasform
- 4a,b: Blasformteil
- 5: Reckstange
- 6: Blasformträger
- 6a, 6b: Blasformträgerteil
- 8: Blasstation, Umformungsstation
- 9: Führungskurve
- 10: Kunststoffvorformlinge
- 10a: Behältnis
- 11: Folgeeinrichtung
- 12: Schlitten
- 13: Boden
- 17: Deckel
- 18: Wandung
- 19: Seitenwand, Abschnitt
- 20: Reinraum
- 22: Zuführeinrichtung
- 23: Halteeinrichtung
- 24: Abführeinrichtung
- 25: Dichtungseinrichtung
- 26: Träger
- 27: Dichtungseinrichtung
- 28: Träger (für Bodenform)
- 29: Haltekörper
- 30: Heizeinrichtung
- 31: Heizelemente
- 32: Sterilisationseinrichtung
- 36: Übergabeeinheit
- 37: Transportrad
- 40: Befüllungseinrichtung
- 42: Übergabeeinheit
- 44: Transporteinheit
- 50: Sterilisationseinrichtung
- 58: Schwenkwelle (zum Öffnen und Schließen der Blasform)
- 60: Verriegelungsmechanismus
- 62: erstes Verriegelungselement
- 63: erstes Verriegelungselement, Klotz
- 64: zweites Verriegelungselement
- 66: Bewegungseinrichtung, Schwenkwelle
- 66a, 66b: Endabschnitte der Schwenkwelle 66
- 67: Stützkörper
- 68: Betätigungselement
- 72, 74: Lagereinrichtungen
- 76: Ausnehmung
- 78: Dichtungseinrichtung
- 84: Vorsprung
- 82: Ausnehmung

- 108: Umformungsstation (StdT)
- 182: Arm (StdT)
- 172: Rasteinrichtung (StdT)
- U: Umgebung
- F: Kraft
- L: Linie
- X: Achse
- Y: Richtung

## Patentansprüche

1. Vorrichtung (1) zum Umformen von Kunststoffvorformlingen (10) zu Kunststoffbehältnissen (10a) mit einer Vielzahl von Umformungsstationen (8), welche an einem beweglichen Träger (2) angeordnet sind, wobei die Umformungsstationen (8) jeweils Blasformen (4) aufweisen, innerhalb derer die Kunststoffvorformlinge (10) durch Beaufschlagung mit einem fließfähigen Medium zu Kunststoffbehältnissen (10a) umformbar sind sowie Blasformträger (6) zum Halten dieser Blasformen (4) und wobei die Blasformträger (6) wenigstens zwei relativ zueinander bewegliche Blasformträgerteile (6a, 6b) zum Öffnen und Schließen der Blasformen (4) aufweisen, mit einem gegenüber einer Umgebung mittels wenigstens einer Wandung (17, 18, 19) abgegrenzten Reinraum (20), der die einzelnen Umformungsstationen (8) wenigstens teilweise umgibt, so dass die Umformungsstationen (8) innerhalb dieses Reinraums (20) bewegbar sind und mit einem zumindest teilweise innerhalb des Reinraums (20) angeordneten Verriegelungsmechanismus (60), der zum Verriegeln der beiden Blasformträgerteile (6a, 6b) miteinander in einem geschlossenen Zustand der Blasform (4) dient,
wobei der Verriegelungsmechanismus (60) ein erstes Verriegelungselement (62) aufweist, welches zum Verriegeln mit einem zweiten Verriegelungselement (64) zusammenwirkt und wobei das erste Verriegelungselement mittels einer Bewegungseinrichtung (66) um eine vorgegebene Schwenkachse schwenkbar bewegbar ist,
**dadurch gekennzeichnet, dass**
die Bewegungseinrichtung (66) mittels wenigstens einer wenigstens teilweise außerhalb des Reinraums (20) angeordneten Lagereinrichtung (72, 74) gelagert ist.

2. Vorrichtung nach Anspruch 1, **dadurch gekennzeichnet, dass**
die Lagereinrichtung (72, 74) an dem Träger (2) angeordnet sind.

3. Vorrichtung nach Anspruch 2,
**dadurch gekennzeichnet, dass**
die Bewegungseinrichtung (66) mittels wenigstens einer Dichtungseinrichtung (72) gegenüber dem Träger (2) abgedichtet ist

4. Vorrichtung nach Anspruch 3,
**dadurch gekennzeichnet, dass**
die Dichtungseinrichtung (78) eine Wellendichtung ist.

5. Vorrichtung nach Anspruch 1,
**dadurch gekennzeichnet, dass**
der Träger (2) an seinem Aussenumfang eine Ausnehmung (76) aufweist, in der die Umformungsstationen (8) angeordnet sind

6. Vorrichtung nach Anspruch 1,
**dadurch gekennzeichnet, dass**
wenigstens ein Verriegelungselement (72, 74) wenigstens eine lochartige Ausnehmung (82) aufweist, und das andere Verriegelungselement (74, 72) wenigstens einen Vorsprung (84), der in einem verriegelten Zustand in die lochartige Ausnehmung eingreift.

7. Vorrichtung nach wenigstens einem der vorangegangenen Ansprüche,
**dadurch gekennzeichnet, dass**
ein Blasformträgerteil (6a, 6b) ortsfest gegenüber dem Träger (2) angeordnet ist.

8. Vorrichtung nach wenigstens einem der vorangegangenen Ansprüche,
**dadurch gekennzeichnet, dass**
die Vorrichtung ein Betätigungselement (68) zum Bewegen des ersten Verriegelungselements (62) aufweist und dieses Betätigungselement außerhalb des Reinraums (20) angeordnet ist.

## Claims

1. An apparatus (1) for moulding plastic preforms (10) into plastic containers (10a), comprising a plurality of moulding stations (8) which are arranged on a movable carrier (2), said moulding stations (8) each including blow moulds (4), within which the plastic preforms (10) can be moulded into plastic containers (10a) by applying a flowable medium, as well as blow mould carriers (6) for holding these blow moulds (4), and wherein the blow mould carriers (6) include at least two blow mould carrier parts (6a, 6b) for opening and closing the blow moulds (4), which blow mould carrier parts are movable relative to each other, comprising a clean room (20) delimited against an environment by means of at least one wall (17, 18, 19), which clean room at least partially surrounds the individual moulding stations (8), so that the moulding stations (8) can be moved within this clean room (20), and comprising a locking mechanism (60) that is at least partially located within the clean room (20), which locking mechanism is used to lock the two blow mould carrier parts (6a, 6b) together in a closed condition of the blow mould (4), wherein the locking mechanism (60) includes a first locking element (62) that for locking cooperates with a second locking element (64), said first locking element being arranged to be movable by a movement means (66) around a predefined pivot axis, **characterized in that** the movement means (66) is supported by means of at least one bearing means (72, 74) that is at least partially provided outside of the clean room (20).

2. The apparatus as claimed in claim 1, **characterised in that** the bearing means (72, 74) are provided on the carrier (2).

3. The apparatus as claimed in claim 2, **characterised in that** the movement means (66) is sealed against the carrier (2) by means of at least one sealing unit (72).

4. The apparatus as claimed in claim 3, **characterised in that** the sealing unit (78) is a shaft seal.

5. The apparatus as claimed in claim 1, **characterised in that** the carrier (2) has a recess (76) on the outer perimeter thereof, in which the moulding stations (8) are arranged.

6. The apparatus as claimed in claim 1, **characterised in that** at least one locking element (72, 74) has at least one hole-shaped recess (82) and the other locking element (74, 72) has at least one protrusion (84) that engages in a locked condition into the hole-shaped recess.

7. The apparatus as claimed in at least one of the preceding claims, **characterised in that** a blow mould carrier part (6a, 6b) is provided to be stationery relative to the carrier (2).

8. The apparatus as claimed in at least one of the preceding claims, **characterised in that** the apparatus has an actuating element (68) for moving the first locking element (62), and this actuating element is provided outside of the clean room (20).

## Revendications

1. Installation (1) pour la transformation de préformes en matière plastique (10) en récipients en matière plastique (10a), comprenant une pluralité de stations de transformation (8) montées sur un support mobile (2), lesdites stations de transformation (8) comportant chacune des moules de soufflage (4) à l'intérieur desquels les préformes en matière plastique (10) sont transformables en récipients en matière plastique (10a) par application d'un milieu fluide, ainsi que des supports (6) de moule de soufflage pour le maintien desdits moules de soufflage (4), et où les supports (6) de moule de soufflage comportent au moins deux parties (6a, 6b) de support de moule de soufflage déplaçables l'une par rapport à l'autre pour ouvrir et fermer les moules de soufflage (4), comprenant un compartiment stérile (20) isolé de l'environnement par au moins une paroi (17, 18, 19), lequel entoure au moins en partie les différentes stations de transformation (8), de telle manière que les stations de transformation (8) sont mobiles à l'intérieur dudit compartiment stérile (20), et comprenant un mécanisme de verrouillage (60) disposé au moins en partie à l'intérieur du compartiment stérile (20) et qui sert au verrouillage des deux parties (6a, 6b) de support de moule de soufflage l'une avec l'autre en état de fermeture du moule de soufflage (4),
le mécanisme de verrouillage (60) comportant un premier élément de verrouillage (62) coopérant pour le verrouillage avec un deuxième élément de verrouillage (64), le premier élément de verrouillage étant déplaçable au moyen d'un dispositif de déplacement (66), par pivotement autour d'un axe de pivotement défini,
**caractérisée en ce que**
le dispositif de déplacement (66) est monté au moyen d'au moins un dispositif de palier (72, 74) disposé au moins en partie à l'extérieur du compartiment stérile (20).

2. Installation (1) selon la revendication 1, **caractérisée en ce que**
les dispositifs de palier (72, 74) sont montés sur le support (2).

3. Installation selon la revendication 2, **caractérisée en ce que**
le dispositif de déplacement (66) est isolé de manière étanche par rapport au support (2) au moyen d'au moins un dispositif d'étanchéité (72).

4. Installation selon la revendication 3, **caractérisée en ce que**
le dispositif d'étanchéité (78) est un joint pour arbre.

5. Installation selon la revendication 1, **caractérisée en ce que**
le support (2) présente un dégagement (76) sur sa périphérie extérieure, où sont disposées les stations de transformation (8).

6. Installation selon la revendication 1, **caractérisée en ce qu'**
au moins un élément de verrouillage (72, 74) présente au moins une cavité en forme de trou (82), et **en ce que** l'autre élément de verrouillage (74, 72) présente au moins une saillie (84) qui s'engage dans la cavité en forme de trou en état de verrouillage.

7. Installation selon au moins une des revendications précédentes, **caractérisée en ce qu'**
une partie (6a, 6b) de support de moule de soufflage est fixe par rapport au support (2).

8. Installation selon au moins une des revendications précédentes, **caractérisée en ce que**
l'installation comporte un élément d'actionnement (68) pour le déplacement du premier élément de verrouillage (62), et **en ce que** ledit élément d'actionnement est disposé à l'extérieur du compartiment stérile (20).
